# EUROPÄISCHE PATENTSCHRIFT

(11) **EP 0 381 858 B1**
(45) Veröffentlichungstag und Bekanntmachung des Hinweises auf die Patenterteilung: **10.02.1993**
(21) Anmeldenummer: 89123944.4
(22) Anmeldetag: 27.12.1989
(51) Int. Cl.: F02M 31/135

(54) **Einrichtung zur Regelung der Ansauggemischtemperatur einer Brennkraftmaschine, insbesondere in Kraftfahrzeugen**
Device for controlling the intake mixture temperature of an internal-combustion engine, particularly in motor vehicles
Dispositif pour régler la température du mélange aspiré d'un moteur à combustion interne, plus particulièrement de véhicules à moteur

(30) Priorität: 03.02.1989 DE 3903234
(43) Veröffentlichungstag der Anmeldung: 16.08.1990
(73) Patentinhaber: Hella KG Hueck & Co., 59552 Lippstadt (DE)
(72) Erfinder: Möllers, Martin, D-4835 Mastholte (DE)

(56) Entgegenhaltungen:
- DE-A- 3 729 441
- FR-A- 2 163 241
- FR-A- 2 432 614
- GB-A- 2 162 578
- GB-A- 2 186 633
- US-A- 3 850 152
- US-A- 4 398 520
- US-A- 4 545 357
- PATENT ABSTRACTS OF JAPAN vol. 11, no. 25 (M-556)(2472) 23 Januar 1987, & JP-A-61 197752 (MAZDA) 02 September 1986,
- PATENT ABSTRACTS OF JAPAN vol. 10, no. 234 (M-507)(2290) 14 August 1986, & JP-A-61 66856 (TOYOTA) 05 April 1986,
- IEEE Transactions on Industrial Electronics, IE-31,no.4, Nov. 1984, New York USA
- 1207A Journal A, vol.20, no.2, (1979.04)

## Beschreibung

Die Erfindung betrifft eine Einrichtung zur Regelung der Ansauggemischtemperatur einer Brennkraftmaschine, insbesondere in Kraftfahrzeugen, mit mindestens einem Ansauggemischtemperaturfühler, mit einer Regeleinrichtung, die das Fühlerausgangssignal empfängt und die abhängig von dem Fühlerausgangssignal und einer Solltemperatur des Ansauggemischs eine Stelleinrichtung zur Beeinflussung der Ansauggemischtemperatur steuert, wobei mindestens ein weiterer Fühler zum Messen mindestens einer Betriebsgröße der Brennkraftmaschine vorgesehen ist, der die Solltemperatur abhängig von den gemessenen Betriebsgrößen beeinflußt.

Es sind Einrichtungen bekannt, die die Ansauggemischtemperatur der Brennkraftmaschine beim Kaltstart der Brennkraftmaschine erhöhen, um die Kondensation von Brennstoffanteilen auf den kalten Saugrohrwandungen der Brennkraftmaschine zu verhindern. Die Kondensation von Brennstoffanteilen auf den Saugrohrwandungen würde das Ansauggemisch abmagern und zu einem schlechten Betriebsverhalten der Brennkraftmaschine führen.

Diese vorbekannten Einrichtungen weisen jedoch den Nachteil auf, daß keinerlei Mittel und Maßnahmen vorgesehen sind, um nach dem Kaltstart sowohl bei kalter als auch bei warmer Brennkraftmaschine die Temperatur des Ansauggemischs zu regeln. Es sind bei den vorbekannten Einrichtungen keinerlei Hinweise darauf bekannt, abhängig von welchen Größen die Ansauggemischtemperatur nach dem Kaltstart zu regeln wäre.

Zur Überwindung dieses Nachteils ist aus der US-A- 4 545 357 eine Einrichtung gemäß dem Oberbegriff des Anspruchs 1 bekannt, die mindestens einen weiteren Fühler zum Messen mindestens einer Betriebsgröße der Brennkraftmaschine aufweist, welcher die Solltemperatur des Ansauggemisches abhängig von den gemessenen Betriebsgrößen beeinflußt. Damit soll eine Anpassung der Ansauggemischtemperatur an die Betriebsbedingungen der Brennkraftmaschine ermöglicht werden.

Diese vorbekannte Einrichtung weist jedoch Nachteile auf. Insbesondere beim Betrieb einer Brennkraftmaschine in einem Kraftfahrzeug im Stadtverkehr wechseln die Betriebsgrößen, wie z. B. Last und Drehzahl der Brennkraftmaschine so schnell, daß die Ansauggemischtemperatur der entsprechend den Betriebsgrößen eingestellten Solltemperatur, z. B. aufgrund der Wärmekapazität,der Saugrohrheizung und des Saugrohres der Brennkraftmaschine, nicht zu folgen vermag. Dies hat im wesentlichen unkontrollierbare Ansauggemischtemperaturen zur Folge, die mit den aktuellen Betriebsgrößen der Brennkraftmaschine und damit dem Betriebszustand der Brennkraftmaschine nicht in Beziehung stehen. Die Ansauggemischtemperatur ist also bei solchen schnell wechselnden Betriebszuständen der Brennkraftmaschine entweder zu hoch oder zu niedrig, so daß das angestrebte Ziel möglicherweise zumindest im Kraftfahrzeug nicht vollständig verwirklicht werden kann.

Die Erfindung hat die Aufgabe, eine Einrichtung zur Regelung der Ansauggemischtemperatur einer Brennkraftmaschine insbesondere in Kraftfahrzeugen zu schaffen, die einfach und kostengünstig ist und die eine sinnvolle Anpassung der Ansauggemischtemperatur an Betriebsbedingungen der Brennkraftmaschine ermöglicht.

Diese Aufgabe wird erfindungsgemäß dadurch gelöst, daß eine Sperreinrichtung vorgesehen ist, die eine Veränderung der Solltemperatur abhängig von den Betriebsgrößen unterdrückt, wenn sich die Betriebsgrößen innerhalb einer vorgegebenen Zeitdauer und innerhalb eines vorgegebenen Betrages ändern.

Durch die erfindungsgemäße Einrichtung kann also die Ansauggemischtemperatur auch nach dem Kaltstart der Brennkraftmaschine auf eine vorgegebene Solltemperatur geregelt werden. Zusätzlich ist eine Einrichtung zum Erfassen einer weiteren Betriebsgröße der Brennkraftmaschine vorgesehen, deren Ausgangssignal die Solltemperatur des Ansauggemischs beeinflußt. Durch diese Maßnahme kann z. B. auch bei einem Betrieb der Brennkraftmaschine in sehr kalter Umgebung nach dem Warmlaufen der Brennkraftmaschine eine Kondensation von Brennstoffanteilen des Ansauggemischs an den Saugrohrwandungen sicher vermieden werden. Zudem ist es möglich, den thermischen Wirkungsgrad der Brennkraftmaschine durch entsprechende Anpassung der vorgegebenen Solltemperatur an die Betriebsbedingungen der Brennkraftmaschine günstig zu beeinflussen.

Um den allgemein üblichen schnellen Änderungen der Betriebsgrößen von Brennkraftmaschinen, insbesondere bei der Verwendung in Kraftfahrzeugen, Rechnung zu tragen, ist erfindungsgemäß eine Sperreinrichtung vorgesehen, die eine Veränderung der Solltemperatur abhängig von den Betriebsgrößen unterdrückt, wenn sich die Betriebsgrößen innerhalb einer vorgegebenen Zeitdauer und innerhalb eines vorgegebenen Betrages ändern. Durch die Sperreinrichtung wird verhindert, daß jede Änderung der Betriebsgrößen unabhängig von der Dauer der Änderung und der Größe der Änderung zu einer Änderung der Solltemperatur führt. Das heißt, kurzfristige und geringfügige Änderungen der Betriebsgrößen führen nicht zu einer entsprechenden Änderung der Solltemperatur.

Durch diese Maßnahmen der erfindungsgemäßen Einrichtung werden vor allem kurzfristige Änderungen der Ansauggemischtemperatur, denen das Ansaugsystem und die Brennkraftmaschine aufgrund ihrer Trägheit und der Wärmekapazität, insbesondere des Saugrohres, nicht zu folgen vermag, wie sie z. B. beim Betrieb eines Kraftfahrzeuges im Stadtverkehr auftreten, unterbunden. Andererseits ist die erfindungsgemäße Sperreinrichtung unwirksam, wenn die Änderungen der Betriebsgrößen länger andauernd sind oder wenn die Änderungen der Betriebsgrößen den vorgegebenen Betrag übersteigen. Dies kann z. B. der Fall sein beim Wechsel des Betriebszustandes des Kraftfahrzeuges vom Betrieb des Kraftfahrzeuges im Kurzstreckenverkehr zum Betrieb des Kraftfahrzeuges z. B. bei einer länger andauernden Autobahnfahrt.

Die erfindungsgemäße Einrichtung hat also gegenüber dem Vorbekannten den Vorteil, daß eine Anpassung der Ansauggemischtemperatur nur an tatsächlich wechselnde Betriebsbedingungen der Brennkraftmaschine möglich ist. Das heißt, stellt sich eine nennenswerte oder dauerhafte Änderung der Betriebsgröße ein, so wird auch die Solltemperatur und damit die geregelte Ansauggemischtemperatur durch die Einrichtung entsprechend angepaßt.

Vorteilhafte Ausgestaltungen und Weiterbildungen des Erfindungsgegenstands gehen aus den Unteransprüchen hervor.

Man kann vorteilhaft als Betriebsgröße der Brennkraftmaschine deren Last oder Belastung wählen, weil z. B. die Wärmeerzeugung der Brennkraftmaschine um so größer ist, je größer die Last der Brennkraftmaschine ist. Die Last der Brennkraftmaschine kann vorteilhaft indirekt durch Messung des Saugrohrunterdrucks einer gemischverdichtenden Brennkraftmaschine oder durch Messung der Stellung der Regelstange einer Einspritzpumpe einer luftverdichtenden Brennkraftmaschine gemessen werden.

Als weitere Betriebsgröße der Brennkraftmaschine kommt die Drehzahl der Brennkraftmaschine in Frage.

Werden Drehzahl und Last der Brennkraftmaschine als Betriebsgrößen berücksichtigt, so ist es besonders vorteilhaft, einen Kennfeldspeicher vorzusehen. In diesem Kennfeldspeicher sind dann die einzustellenden Solltemperaturen abhängig von Drehzahl und Last der Brennkraftmaschine abgelegt. So ist es möglich, eine Vielzahl von Solltemperaturen den jeweiligen Wertepaaren aus Drehzahl und Last der Brennkraftmaschine zuzuordnen.

Es ist besonders vorteilhaft, wenn die Solltemperatur abhängig von den Betriebsgrößen der Brennkraftmaschine stufenweise änderbar ist, weil sowohl die Saugrohrheizung als auch das zu beheizende Saugrohr eine vorgegebene Wärmekapazität besitzen und insofern nicht beliebig schnell auf Änderungen der voreingestellten Solltemperatur reagieren. Um kurzfristig und vom Betrage her geringfügige Änderungen Betriebsgrößen der Brennkraftmaschine unberücksichtigt zu lassen, ist es vorteilhaft, die Solltemperatur stufenweise zu ändern. Ist zusätzlich ein Motorkennfeldspeicher vorgesehen, so heißt das, daß die Solltemperatur verglichen mit der Zahl der Motorkennfeldpunkte nur in einer geringen Zahl von Stufen änderbar ist.

Beim Betrieb einer Brennkraftmaschine, insbesondere in Kraftfahrzeugen, wird häufig die Brennkraftmaschine regelmäßig wiederkehrend in typischer Art und Weise belastet. Diese typische Art und Weise der Belastung ergibt sich aus der Bedienung der Brennkraftmaschine durch immer den gleichen Bediener und aus dem häufigen Durchfahren der immer gleichen Fahrstrecke. Die erfindungsgemäße Einrichtung kann dann vorteilhaft lernfähig oder adaptiv ausgebildet werden, derart, daß z. B. ein Speicher vorgesehen ist, der eine Solltemperatur für den Start der Brennkraftmaschine aufweist, wobei dann davon ausgegangen wird, daß der Bediener des Kraftfahrzeuges die Brennkraftmaschine in der gleichen Weise bedienen wird, wie er dies vorher bereits getan hat. Aus dem gleichen Grund kann ein zweiter Speicher vorgesehen sein, der Solltemperaturen für typische Werte von Betriebsgrößen der jeweiligen Brennkraftmaschine aufweist, wobei hier davon ausgegangen wird, daß nicht nur dem Start der Brennkraftmaschine die typische immer wiederkehrende Bedienung des Kraftfahrzeuges folgt, sondern, daß auch über längere Benutzungszeiten die Brennkraftmaschine in dieser typischen Weise belastet wird.

Man kann vorteilhaft als Sperreinrichtung einen Integrierer wählen, der den Wert der Betriebsgrößen integriert, so daß auch starke Änderungen der Betriebsgrößen nur dann zu einer Änderung der Solltemperatur des Ansauggemisches führen, wenn sie genügend lange anstehen, um die Ausgangsgröße des Integrierers deutlich zu ändern. Statt eines Integrierers kann auch ein Summierer verwendet werden, der den Wert der Betriebsgrößen aufsummiert. Der Summierer hat in etwa die gleiche Wirkung wie der Integrierer und führt in etwa eine zeitliche Mittelwertbildung der Betriebsgrößen durch.

Als Sperreinrichtung kann auch ein Tiefpassfilter verwendet werden, der in etwa nur den Gleichanteil des Werts der Betriebsgröße durchläßt, jedoch für schnelle Änderungen des Werts der Betriebsgröße gesperrt ist.

Man kann vorteilhaft die Zeitdauer und/oder den Betrag von der Betriebsgröße und/oder anderen Eingangsgrößen abhängig wählen. Z. B. ist es sinnvoll, wenn bei einem vergleichsweise hohen Wert der Betriebsgröße nur entsprechend große Änderungen der Betriebsgröße noch zu einer Änderung der Solltemperatur des Kühlmittels führen.

Als weitere Eingangsgröße kann man z. B. die Außentemperatur eines Kraftfahrzeugs wählen, um z. B. der veränderten Trägheit der Ansauggemischvorwärmung bei veränderten Außentemperaturen Rechnung zu tragen.

Die Stelleinrichtung kann ein Wasserventil und/oder eine Wasserpumpe mit veränderlicher Pumpleistung sein, wenn die Beheizung des Saugrohres z. B. durch eine Zweigleitung über das Kühlsystem der Brennkraftmaschine erfolgt. Die Stelleinrichtung kann jedoch auch ein elektrischer Schalter einer elektrischen Einrichtung zur Beeinflussung der Ansauggemischtemperatur sein. Die Wahl des verwendeten Stellglieds kann also abhängig von der vorhandenen Ansauggemischvorwärmung getroffen werden.

Ein Ausführungsbeispiel der erfindungsgemäßen Einrichtung zur Regelung der Ansauggemischtemperatur einer Brennkraftmaschine ist in den Zeichnungen dargestellt und wird im folgenden anhand der Zeichnungen näher erläutert.

Es zeigen
Figur 1 grobschematisch eine erfindungsgemäße Einrichtung als Teil einer herkömmlichen Brennkraftmaschine mit Saugrohrvorwärmung und
Figur 2 grobschematisch die elektrische Regeleinrichtung der erfindungsgemäßen Einrichtung.

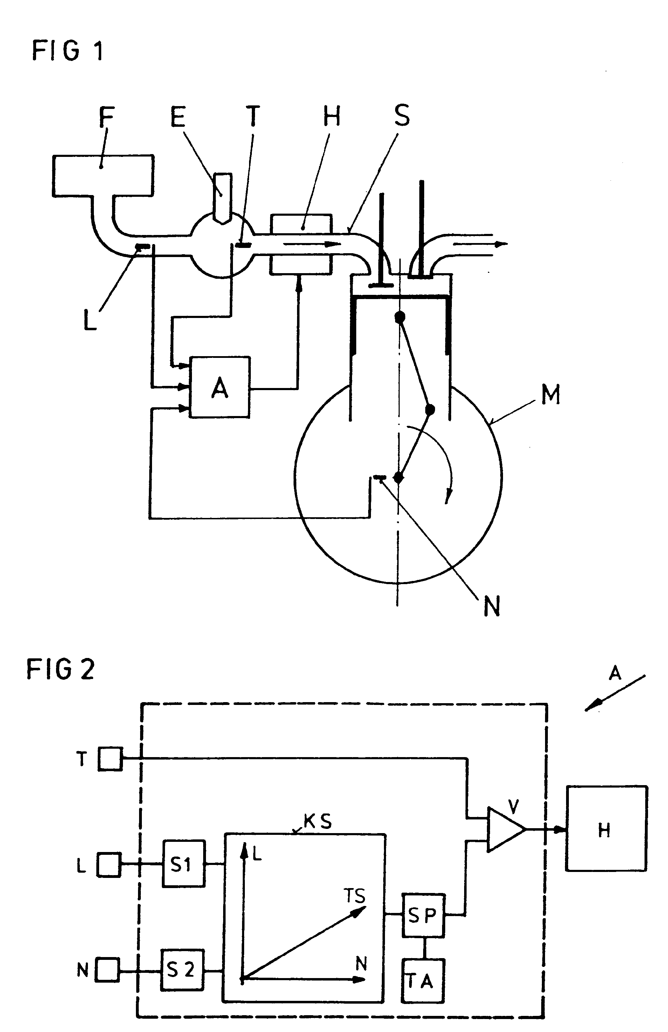

In der Figur 1 ist eine Brennkraftmaschine bzw. ein Verbrennungsmotor (Mt an seiner Einlaßseite mit einem Saugrohr (S) verbunden, das an seinem anderen Ende in einem Luftfilter (F) zum Ansaugen der Verbrennungsluft mündet. In dem Saugrohr (S) ist eine Mischkammer vorgesehen, in die ein Einspritzventil (E) einer Zentraleinspritzung hereinragt. Statt mit einer Zentraleinspritzung kann die erfindungsgemäße Einrichtung auch bei einer Brennkraftmaschine mit einem Vergaser verwendet werden. Das Einspritzventil (E) spritzt in die von der Brennkraftmaschine (Mt über das Saugrohr (St angesaugte Verbrennungsluft den Brennstoff derart ein, daß er verwirbelt wird und hinter der Mischkammer mit dem Einspritzventil (E) sich das Ansauggemisch im Saugrohr (S) befindet.

Das Saugrohr (S) ist teilweise von einer Saugrohrheizung (H) umgeben, die als Stelleinrichtung zur Beeinflussung der Ansauggemischtemperatur verwendet wird. Im Ausführungsbeispiel nach der Figur 1 wird als Saugrohrheizung (H) eine elektrische Saugrohrheizung verwendet, die direkt durch eine elektrische Regeleinrichtung (A) steuerbar ist. Die Regelung der Ansauggemischtemperatur durch Steuerung der Saugrohrheizung (H) durch die Regeleinrichtung (A) erfolgt abhängig von drei Eingangsgrößen, die durch drei Fühler ermittelt werden. Im Saugrohr (S) ist ein Ansauglufttemperaturfühler (T) vorgesehen. Ebenfalls im Ansaugrohr (S) befindet sich vor der Mischkammer mit dem Einspritzventil (E) ein Motorlastfühler (L) der als Saugrohrunterdruckfühler ausgebildet ist. Als dritte Eingangsgröße der Regeleinrichtung (A) wird die Motordrehzahl der Brennkraftmaschine (M) durch einen Motordrehzahlfühler (N) ermittelt.

In der Figur 2 wird die Ausgangsgröße des Motorlastfühlers (L) einer ersten Sperreinrichtung (S1) zugeleitet, die nur dann eine Weiterleitung des Werts der Motorlast (L) an einen Kennfeldspeicher (KS) ermöglicht, wenn eine Änderung der Betriebsgröße Motorlast erfolgt, die für eine vorgegebene Zeitdauer anliegt oder einen vorgegebenen Betrag übersteigt.

Ebenso wird das Ausgangssignal des Motordrehzahlfühlers (N) einer zweiten Sperreinrichtung (S2) zugeleitet, die den Wert der Motordrehzahl (N) nur dann an den Kennfeldspeicher (KS) weiterleitet, wenn die Motordrehzahl (N) sich mindestens für eine vorgegebene Zeitdauer oder mindestens um einen vorgegebenen Betrag geändert hat.

Wie im Kennfeldspeicher (KS) der Figur 2 schematisch angedeutet, spannen die Betriebsgrößen Motorlast (L) und Motordrehzahl (N) eine Ebene auf. Für ein vorgegebenes Paar aus Motordrehzahl (N) und Motorlast (L) ist in dem Kennfeldspeicher (KS) eine Solltemperatur (TS) abgelegt, die über einen Speicher (SP) an einen Vergleicher (V) weiterleitbar ist. Damit erhält der Vergleicher (V) als erste Eingangsgröße die abhängig von den Betriebsgrößen Motorlast (L) und Motordrehzahl (N) gewählte Solltemperatur (TS) des Ansauggemischs. Als zweite Eingangsgröße erhält der Vergleicher (V) das Ausgangssignal des Ansauggemischtemperaturfühlers (T) und bildet aus den beiden Eingangsgrößen ein Differenzsignal, das gegebenenfalls über Endstufenschaltungen der Saugrohrheizung (H) zugeleitet wird.

Der Speicher (SP) ist mit einem Taktgeber oder einem Zeitgeber (TA) verbunden und ermittelt die Zeitdauer, während der der vom Kennfeldspeicher (KS) ausgegebene Temperatursollwert (TS) am Vergleicher (V) anliegt. Damit ist durch den Speicher (SP) eine Betrachtung der Häufigkeit möglich, in der ein vorgegebener Sollwert (TS) am Vergleicher (V) anliegt. Die Häufigkeit bzw. Zeitdauer, in der ein vorgegebener Temperatursollwert (TS) anliegt, ist direkt mit dem Betrieb der Brennkraftmaschine verknüpft.

Die Funktion der erfindungsgemäßen Einrichtung wird nun anhand der Figuren 1 und 2 näher erläutert. Es sei angenommen, daß die Brennkraftmaschine in einem Kraftfahrzeug angeordnet ist und daß sich das Kraftfahrzeug mit kontinuierlicher Geschwindigkeit und kontinuierlicher Belastung vorwärts bewegt. Damit ist die Last (L) und die Drehzahl (N) der Brennkraftmaschine konstant und es wird durch den Kennfeldspeicher (KS) eine vorgegebene Solltemperatur (TS) an den Vergleicher (V) weitergeleitet, auf die die Regeleinrichtung (A) die Ansauggemischtemperatur regelt.

Ändert sich nun die Belastung der Brennkraftmaschine dadurch, daß z. B. das Kraftfahrzeug weiterhin mit konstanter Geschwindigkeit bewegt wird, daß sich das Fahrzeug jedoch z. B. bergauf bewegt, so wird die Motorlast (L) größer, wobei die Motordrehzahl (N) gleich bleibt. Die Veränderung der Motorlast (L) führt solange nicht zu einer Änderung der Solltemperatur (TS), solange die Änderung der Motorlast (L) einen vorgegebenen Betrag nicht überschreitet oder nicht eine vorgegebene Zeitdauer an der ersten Sperreinrichtung (S1) angelegen hat. Hat sich die Motorlast (L) um den vorgegebenen Betrag mindestens geändert oder liegt die Änderung länger als die vorgegebene Zeitdauer an der ersten Sperreinrichtung (S1) an, so leitet die erste Sperreinrichtung die Änderung bzw. den neuen Wert der Motorlast (L) an den Kennlinienspeicher weiter, der daraufhin entsprechend dem neuen Paar aus Motorlast (L) und Motordrehzahl (N) eine neue geänderte Solltemperatur (TS) über den Speicher (SP) an den Vergleicher (V) weiterleitet, so daß die Regeleinrichtung (A) die Ansauggemischtemperatur auf die neue Solltemperatur (TS) regelt.

Entsprechend wird die Solltemperatur (TS) bei einer Verminderung der Motorlast (L) oder bei einer Änderung der Motordrehzahl (N) als Betriebsgröße der Brennkraftmaschine durch den Kennfeldspeicher (KS) beeinflußt.

Aus dem oben Gesagten wird deutlich, daß schnelle Änderungen der Motorlast oder der Motordrehzahl zu keiner Änderung der Solltemperatur (TS) des Ansauggemischs führen, weil die Saugrohrheizung aufgrund ihrer Wärmekapazität und z. B. der Wärmekapazität des Saugrohres derartigen schnellen Änderungen der Solltemperatur nicht folgen kann. Andererseits ist es anders als beim Vorbekannten möglich, daß große Änderungen der Betriebsgrößen der Brennkraftmaschine oder geringfügige Änderungen der Betriebsgrößen, die über einen langen Zeitraum ermittelt werden, zu einer entsprechenden Änderung der Solltemperatur des Ansauggemischs führen. Diesen Änderungen der Solltemperatur des Ansauggemischs kann die Saugrohrheizung aufgrund der langen Zeitdauer durchaus folgen. Von welchen Betriebsgrößen der Brennkraftmaschine die Solltemperatur abhängig gewählt wird, ist allein von den Zielvorstellungen, die mit den Änderungen der Ansauggemischtemperatur verfolgt werden, abhängig. Die Wahl der Betriebsgröße und die Art der Berücksichtigung für die Solltemperatur (TS) ist durch die erfindungsgemäße Einrichtung nicht beschränkt.

Es ist selbstverständlich, daß die vorbekannte Ansauggemischvorwärmung beim Kaltstart der Brennkraftmaschine mit der erfindungsgemäßen Einrichtung zusätzlich ohne weiteren Aufwand realisiert werden kann.

## Patentansprüche

1. Einrichtung zur Regelung der Ansauggemischtemperatur einer Brennkraftmaschine (M), insbesondere in Kraftfahrzeugen, mit mindestens einem Ansauggemischtemperaturfühler (T), mit einer Regeleinrichtung (A), die das Fühlerausgangssignal empfängt und die abhängig von dem Fühlerausgangssignal und einer Solltemperatur (TS) des Ansauggemischs eine Stelleinrichtung (H) zur Beeinflussung der Ansauggemischtemperatur steuert, wobei mindestens ein weiterer Fühler (N, L) zum Messen mindestens einer Betriebsgröße der Brennkraftmaschine (M) vorgesehen ist, der die Solltemperatur (TS) abhängig von den gemessenen Betriebsgrößen beeinflußt, dadurch gekennzeichnet, daß eine Sperreinrichtung (S1, S2) vorgesehen ist, die eine Veränderung der Solltemperatur abhängig von den Betriebsgrößen unterdrückt, wenn sich die Betriebsgrößen innerhalb einer vorgegebenen Zeitdauer und innerhalb eines vorgegebenen Betrages ändern.

2. Einrichtung nach Anspruch 1, dadurch gekennzeichnet, daß die Betriebsgröße die Last (L) der Brennkraftmaschine (M) ist.

3. Einrichtung nach Anspruch 2, dadurch gekennzeichnet, daß die Betriebsgröße der Saugrohrunterdruck der Brennkraftmaschine (M) ist.

4. Einrichtung nach Anspruch 2, dadurch gekennzeichnet, daß die Betriebsgröße die Stellung der Regelstange einer Einspritzpumpe einer luftverdichtenden Brennkraftmaschine (M) ist.

5. Einrichtung nach Anspruch 1, dadurch gekennzeichnet, daß die Betriebsgröße die Drehzahl (N) der Brennkraftmaschine (M) ist.

6. Einrichtung nach Anspruch 2 und Anspruch 5, dadurch gekennzeichnet, daß ein Kennfeldspeicher (KS) vorgesehen ist, in dem die Solltemperatur (TS) abhängig von Drehzahl (N) und Last (L) der Brennkraftmaschine (M) abgelegt ist.

7. Einrichtung nach Anspruch 1, dadurch gekennzeichnet, daß die Solltemperatur (TS) abhängig von den Betriebsgrößen stufenweise änderbar ist.

8. Einrichtung nach Anspruch 6 und Anspruch 7, dadurch gekennzeichnet, daß die Solltemperatur (TS) verglichen mit der Zahl der Motorkennfeldpunkte eines Motorkennfeldspeichers in einer geringen Zahl von Stufen änderbar ist.

9. Einrichtung nach Anspruch 1, dadurch gekennzeichnet, daß ein Speicher (SP) vorgesehen ist, der eine Solltemperatur (TS) für den Start der Brennkraftmaschine aufweist.

10. Einrichtung nach Anspruch 1, dadurch gekennzeichnet, daß ein zweiter Speicher vorgesehen ist, der Solltemperaturen für typische Werte der Betriebsgrößen der jeweiligen Brennkraftmaschine (M) aufweist.

11. Einrichtung nach Anspruch 1, dadurch gekennzeichnet, daß die Sperreinrichtung (S1, S2) ein Integrierer ist, der den Wert der Betriebsgröße integriert.

12. Einrichtung nach Anspruch 1, dadurch gekennzeichnet, daß die Sperreinrichtung (S1, S2) ein Summierer ist, der den Wert der Betriebsgröße aufsummiert.

13. Einrichtung nach Anspruch 1, dadurch gekennzeichnet, daß die Sperreinrichtung (S1, S2) ein Tiefpassfilter ist, der im wesentlichen nur den Gleichanteil des Wertes der Betriebsgröße durchläßt.

14. Einrichtung nach Anspruch 1, dadurch gekennzeichnet, daß die Zeitdauer und/oder der Betrag von der Betriebsgröße und/oder anderen Eingangsgrößen abhängig ist.

15. Einrichtung nach Anspruch 1, dadurch gekennzeichnet, daß die Stelleinrichtung ein Wasserventil und/oder eine Wasserpumpe mit veränderlicher Pumpleistung und/oder ein elektrischer Schalter einer elektrischen Einrichtung zur Beeinflussung der Ansauggemischtemperatur ist.

## Claims

1. Device for controlling the intake mixture temperature of an internal-combustion engine (M), particularly in motor vehicles, having at least one intake mixture temperature sensor (T), a control unit (A) which receives the sensor output signal and which dependent on the sensor output signal and a nominal temperature (TS) of the intake mixture controls an actuating device (H) to influence the temperature of the intake mixture, at least one additional sensor (N, L) for recording at least one operating variable of the internal-combustion engine (M) being provided, said sensor (N, L) influencing the nominal temperature (TS) in response to the operating variables recorded,
characterised by the provision of a blocking device (S1, S2) which inhibits a change in the nominal temperature in response to the operating variables if the operating variables change within a specified time and within a specified amount.

2. Device according to claim 1, characterised in that the operating variable is the load (L) of the internal-combustion engine (M).

3. Device according to claim 2, characterised in that the operating variable is the negative inlet pipe pressure of the internal-combustion engine (M).

4. Device according to claim 2, characterised in that the operating variable is the position of the control rod of a fuel-injection pump of an air-compressing internal-combustion engine (M).

5. Device acording to claim 1, characterised in that the operating variable is the speed (N) of the internal-combustion engine (M).

6. Device according to claim 2 and claim 5, characterised by the provision of a performance data memory (KS) in which the nominal temperature (TS) is made dependent on the speed (N) and load (L) of the internal-combustion engine (M).

7. Device according to claim 1, characterised in that the nominal temperature (TS) is variable stepwise in response to the operating variables.

8. Device according to claim 6 and claim 7, characterised in that the nominal temperature (TS) is variable in a smaller number of steps in comparison to the number of engine performance data points of an engine performance data memory.

9. Device according to claim 1, characterised by the provision of a memory (SP) which incorporates a nominal temperature (TS) for starting the internal-combustion engine (M).

10. Device according to claim 1, characterised by the provision of a second memory which incorporates nominal temperatures for typical values of the operating variables of the respective internal-combustion engine (M).

11. Device according to claim 1, characterised in that the blocking device (S1, S2) is an integrator which integrates the value of the operating variable.

12. Device according to claim 1, characterised in that the blocking device (S1, S2) is a summator which totalises the value of the operating variable.

13. Device according to claim 1, characterised in that the blocking device (S1, S2) is a low-pass filter which lets through substantially only the direct component of the value of the operating variable.

14. Device according to claim 1, characterised in that the length of time and/or the amount is dependent on the operating variable and/or other input variables.

15. Device according to claim 1, characterised in that the actuating device is a water valve and/or a water pump with variable pump output and/or an electric switch of an electrical device for influencing the temperature of the intake mixture.

## Revendications

1. Dispositif de régulation de la température du mélange d'admission d'un moteur à combustion interne (M), en particulier pour véhicules automobiles, comportant au moins un capteur (T) de la température du mélange d'admission, un dispositif de régulation (A) qui reçoit le signal de sortie du capteur et qui commande un dispositif de commande (H) destiné à influer sur la température du mélange d'admission en fonction du signal de sortie du capteur et d'une température de consigne (TS) du mélange d'admission, dans lequel il est prévu au moins un autre capteur (N, L) pour mesurer au moins un paramètre de fonctionnement du moteur à combustion interne (M) qui influe sur la température de consigne (TS) en fonction des paramètres de fonctionnement mesurés, caractérisé en ce qu'il est prévu un dispositif de blocage (S1, S2) qui empêche une variation de la température de consigne en fonction des paramètres de fonctionnement lorsque les paramètres de fonctionnement varient dans les limites d'une durée prédéterminée et d'une valeur prédéterminée.

2. Dispositif selon la revendication 1, caractérisé en ce que le paramètre de fonctionnement est la charge (L) du moteur à combustion interne (M).

3. Dispositif selon la revendication 2, caractérisé en ce que le paramètre de fonctionnement est la dépression du collecteur d'admission du moteur à combustion interne (M).

4. Dispositif selon la revendication 2, caractérisé en ce que le paramètre de fonctionnement est la position de la tige crémaillère d'une pompe d'injection d'un moteur à combustion interne (M) à compression de l'air.

5. Dispositif selon la revendication 1, caractérisé en ce que le paramètre de fonctionnement est la vitesse de rotation (N) du moteur à combustion interne (M).

6. Dispositif selon la revendication 2 et la revendication 5, caractérisé en ce qu'il est prévu une mémoire de réseaux de caractéristiques (KS) dans laquelle est mémorisée la température de consigne (TS) en fonction de la vitesse de rotation (N) et de la charge (L) du moteur à combustion interne (M).

7. Dispositif selon la revendication 1, caractérisé en ce que la température de consigne (TS) est modifiable par degrés en fonction des paramètres de fonctionnement.

8. Dispositif selon la revendication 6 et la revendication 7, caractérisé en ce que la température de consigne (TS) est modifiable dans un petit nombre de degrés par rapport au nombre des points du réseau de caractéristiques du moteur d'une mémoire de réseaux de caractéristiques du moteur.

9. Dispositif selon la revendication 1, caractérisé en ce qu'il est prévu une mémoire (SP) qui comporte une température de consigne (TS) pour le démarrage du moteur à combustion interne.

10. Dispositif selon la revendication 1, caractérisé en ce qu'il est prévu une seconde mémoire qui comporte des températures de consigne pour des valeurs typiques des paramètres de fonctionnement du moteur à combustion interne (M) concerné.

11. Dispositif selon la revendication 1, caractérisé en ce que le dispositif de blocage (S1, S2) est un intégrateur qui intègre la valeur du paramètre de fonctionnement.

12. Dispositif selon la revendication 1, caractérisé en ce que le dispositif de blocage (S1, S2) est un additionneur qui additionne la valeur du paramètre de fonctionnement.

13. Dispositif selon la revendication 1, caractérisé en ce que le dispositif de blocage (S1, S2) est un filtre passe-bas qui ne laisse passer sensiblement que la partie constante de la valeur du paramètre de fonctionnement.

14. Dispositif selon la revendication 1, caractérisé en ce que la durée et/ou la valeur dépend du paramètre de fonctionnement et/ou d'autres grandeurs d'entrée.

15. Dispositif selon la revendication 1, caractérisé en ce que le dispositif de commande est une soupape à eau et/ou une pompe à eau de capacité variable et/ou un commutateur électrique d'un dispositif électrique destiné à influer sur la température du mélange d'admission.
